# EUROPEAN PATENT APPLICATION

(11) **EP 2 682 946 A1**
(43) Date of publication of application: **08.01.2014**
(21) Application number: 12752868.5
(22) Date of filing: 26.01.2012
(51) Int. Cl.: G21C 17/10, G21C 19/20

(54) **GUIDE DEVICE FOR NEUTRON FLUX DETECTOR**

(30) Priority: 02.03.2011 JP 2011045139
(71) Applicant: Mitsubishi Heavy Industries, Ltd., Tokyo 108-8215 (JP)
(72) Inventor: ISONO, Mitsunori, Tokyo 108-8215 (JP); SAKATA, Hideyuki, Tokyo 108-8215 (JP); SASAKI, Kazuhiro, Tokyo 108-8215 (JP); ICHIKAWA, Toshio, Tokyo 108-8215 (JP); NAGANO, Teruyuki, Tokyo 108-8215 (JP); OKANO, Masaaki, Tokyo 108-8215 (JP)
(74) Representative: HOFFMANN EITLE
(86) International application number: PCT/JP2012/051686
(87) International publication number: WO 2012/117779

(57) **Abstract**

In a neutron flux detector guiding apparatus, a cylindrical support column (72) is erected on an upper core support plate (49) of a nuclear reactor container main body (42), a plurality of guide thimble guiding tubes (87, 88, 89, 90, and 91) is provided inside the upper core support column between the upper core support plate (49) and an upper core plate (47), a plurality of guide thimbles (92, 93, 94, 95, and 96) is extended from the support column (72) into the guide thimble guiding tubes, the plurality of guide thimbles (92, 93, 94, 95, and 96) is supported by a support plate (73) supported at one end part by the support column (72) and erected at the other end part by a support leg (74) above the upper core support plate (49), and an upper end part of the support plate (73) is inclined downward from the support column (72) side toward the support leg (74) side, thereby realizing simplification of a structure.

## Description

### Field

The invention relates to a neutron flux detector guiding apparatus that guides a neutron flux detector to a reactor internal of a nuclear reactor.

### Background

For example, a pressurized water reactor (PWR) is intended to use light water as a nuclear reactor coolant and a neutron moderator, turns the light water into a high-temperature, high-pressure water not boiling throughout the entire reactor internal, sends the high-temperature, high-pressure water to a vapor generator to generate vapor by heat exchange, and sends the vapor to a turbine generator for power generation.

In the pressurized water reactor, neutrons generated in the reactor internal are absorbed by a control rod to adjust the number of the neutrons and control the reactor power. It is thus necessary to measure correctly neutron (neutron flux) distribution in the reactor internal. For this purpose, the reactor internal is provided with the control rod and a neutron flux detector. Therefore, a nuclear reactor control device drives a control rod drive mechanism (CRDM) according to the level and distribution of neutron flux detected by the neutron flux detector, thereby controlling the position of the control rod.

The neutron flux detector can be inserted from the lid of a containment through a guiding tube (guide thimble) into a fuel assembly constituting the reactor internal, and a neutron flux detector guiding apparatus is provided in the course. Patent Literature 1 discloses such a neutron flux detector guiding apparatus, for example. The in-reactor neutron flux detector guiding apparatus disclosed in Patent Literature 1 includes a guiding tube into which a lower cylindrical body is inserted to guide the neutron flux detector guiding apparatus into the fuel assembly in the nuclear reactor; an upper core support plate that supports an upper core support column; an instrumentation nozzle that is erected on an overall suspending plate in the nuclear reactor and penetrates through the container lid; an upper cylindrical body placed in the in-reactor instrumentation support column in the instrumentation nozzle; and a large-diameter intermediate cylindrical body connected between the upper cylindrical body and the lower cylindrical body, wherein the intermediate cylindrical body having a bent portion is made large in diameter to facilitate insertion of the neutron flux detector with a small curvature, and the neutron flux detector is guided and supported by a support plate.

### Citation List

### Patent Literature

Patent Literature 1: Japanese Laid-open Patent Publication No. 06-138283

### Summary

### Technical Problem

In the foregoing conventional in-reactor neutron flux detector guiding apparatus, the overall suspending plate is supported at the flange part of the containment, the in-reactor neutron flux detector guiding apparatus is erected on the overall suspending plate, the support column is passed through the instrumentation nozzle to allow insertion of the neutron flux detector from the upper part of the containment and support the support plate by the in-reactor instrumentation support column, the upper cylindrical body provided in the in-reactor instrumentation support column in the instrumentation nozzle and the lower cylindrical body provided in the in-reactor instrumentation support column in the instrumentation nozzle are connected together by the intermediate cylindrical body, and the intermediate cylindrical body is made large in diameter to guide and support the neutron flux detector with a small curvature.

However, in the containment of the nuclear reactor, light water flows in from an upper inlet nozzle, falls along inner wall surfaces, is guided upward by an inner spherical surface of a lower plenum, and flows into the reactor internal. The light water flowing into the reactor internal becomes high in temperature by absorbing heat energy generated from the fuel assembly, and rises up to a upper plenum, and then is discharged from an outlet nozzle. At that time, the light water does flow not only upward and downward in the containment to cool down the reactor internal. A small amount of light water flows over the top of the containment to cool down the lid. In addition, the light water also flows upward in a radial direction and downward from above over an inner surface of the lid in a top plenum in a region surrounded by the container lid and the upper core support plate. Accordingly, the flow of the light water contacts the foregoing support plate to exert a pressing force on the support plate and vibrate the support plate. Therefore, the support plate needs to be fixed with a sufficient strength, thereby resulting in large size, heavy weight, complicated structure, and high costs of the apparatus.

The invention is devised to solve the foregoing problem, and an object of the invention is to provide a neutron flux detector guiding apparatus that can be simplified in structure.

### Solution to Problem

A neutron flux detector guiding apparatus of the present invention in order to solve the problems, is characterized by including: a cylindrical support column erected on an upper core support plate of a nuclear reactor structure main body, the cylindrical support column having an upper end part penetrating a container lid; a guide thimble guiding tube having an upper end part penetrating the upper core support plate, the guide thimble guiding tube being supported by the upper core support plate; a guide thimble extending from the support column into the guide thimble guiding tube, for allowing a neutron flux detector to be inserted into an inside thereof; and a support plate having one end part supported at the support column and the other end part erected by a support leg above the upper core support plate, for supporting the guide thimble, wherein the support plate is vertically disposed on the upper core support plate, and an upper end part of the support plate is inclined downward from the support column side to the support leg side.

Therefore, the support plate has the one end part erected by the support column and the other end part erected by the support leg above the upper core support plate, and the support plate has the upper end part inclined downward from the support column side to the support leg side. The guide thimble is extended from the support column into the thimble guiding pipe in the upper core support column at a smaller bending angle to reduce resistance at installation or removal of a neutron flux detector and minimize the size of the support plate to realize light weight. The support plate is provided with a notch to reduce a wetted area in contact with the light water, which makes it possible to efficiently support the guide thimble and reduce a fluid force received from the coolant. Accordingly, forming the support plate in the ideal shape allows simplification of the structure.

According to the neutron flux detector guiding apparatus of the present invention, it is characterized that the support plate has a trapezoidal shape in which an upper side part is inclined with respect to a horizontal lower side part.

Therefore, forming the support plate in a trapezoidal shape makes it possible to decrease the bending angle of the guide thimble and reduce resistance at installation, removal of the neutron flux detector, and realize light weight. In addition, it is possible to suppress a fluid force received from the coolant and simplify the support structure by the support column and the support leg.

According to the neutron flux detector guiding apparatus of the present invention, it is characterized that the support plate has a thick part thicker than the main body along the upper side part.

Therefore, providing the thick part on the upper side part of the support plate makes it possible to increase the rigidity of the support plate to support properly the guide thimble and realize light weight.

According to the neutron flux detector guiding apparatus of the present invention, it is characterized that the support column is disposed on one side of thickness direction of the support plate, the support column is fixed to the support plate by a U-shaped bracket, and the guide thimble is extended from the support column along the main body of the support plate.

Therefore, extending the guide thimble from the support column along the thin main body of the support plate makes it possible to support the guide thimble properly without interfering with surrounding members.

According to the neutron flux detector guiding apparatus of the present invention, it is characterized that a predetermined gap is provided between the support plate and the upper core support plate, the support plate has a support piece extending from the lower side part through the predetermined gap, and the guide thimble is supported by the support piece.

Therefore, when the support column and the instrumentation nozzle are horizontally shifted in position, the guide thimble is obliquely disposed between the support column and the guide thimble guiding tube. However, supporting the guide thimble by the support piece extending downward from the support plate makes it possible to support the guide thimble properly in the vertical direction.

According to the neutron flux detector guiding apparatus of the present invention, it is characterized that a plurality of the guide thimbles is disposed inside the support column, the plurality of guide thimbles is extended into the plurality of the guiding tubes supported at the upper core support plate at predetermined intervals, and the plurality of guide thimbles is individually supported at the support plate.

Therefore, it is possible to support by the support plate the plurality of guide thimbles arranged from the support column to the plurality of guiding tubes.

According to the neutron flux detector guiding apparatus of the present invention, it is characterized that the support plate has an opening penetrating in the horizontal direction.

Therefore, providing an opening at the support plate makes it possible to make the support plate lightweight, reduce a fluid force received from the coolant, and simplify the support structure including the support column and the support leg.

According to the neutron flux detector guiding apparatus of the present invention, it is characterized that the support plate is disposed between the plurality of control rod cluster guiding tubes.

Therefore, it is possible to dispose the support plate properly without obstructing or interfering with the plurality of control rod cluster guiding pipes. Advantageous Effects of Invention

According to the neutron flux detector guiding apparatus in the invention, the support plate is disposed on the upper core support plate in a vertical direction with one end thereof supported by the support column and other end thereof supported by the support leg, the guide thimble can be supported, the guide thimble is obliquely routed to facilitate insertion of the neutron flux detector at a bending angle smaller than 90 degrees, and the support plate is formed such that the upper end thereof is inclined downward from the support column side to the support leg side. Accordingly, it is possible to support efficiently the guide thimble extending from the support column to the guide thimble guiding tube, and reduce a fluid force received from cooling water, thereby achieving simplification of the structure.

### Brief Description of Drawings

FIG. 1 is a schematic diagram of a neutron flux detector guiding apparatus for according to an embodiment of the invention.
FIG. 2 is a side view of the neutron flux detector guiding apparatus in the embodiment.
FIG. 3 is a plan view of the neutron flux detector guiding apparatus in the embodiment.
FIG. 4 is a cross section view of a support plate in the neutron flux detector guiding apparatus in the embodiment.
FIG. 5 is a schematic configuration diagram of a nuclear power generation plant.
FIG. 6 is a vertical cross section view of a pressurized water nuclear reactor.

### Description of Embodiments

A preferred embodiment of the neutron flux detector guiding apparatus according to the invention will be described below in detail with reference to the attached drawings. However, the invention is not limited to the following embodiment, and when there are multiple embodiments, the invention includes combinations of the embodiments.

### Embodiment

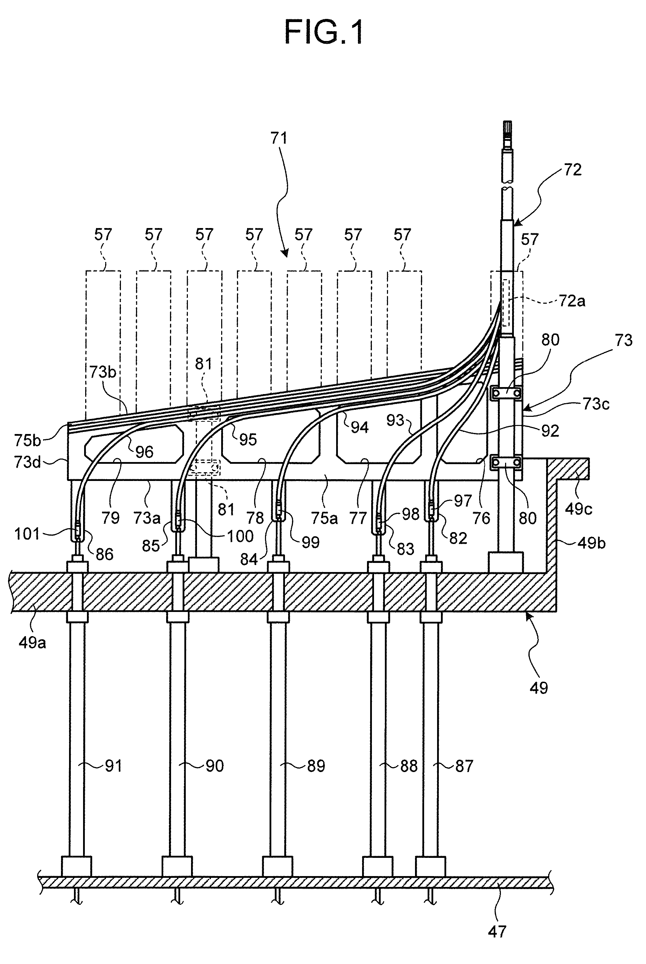

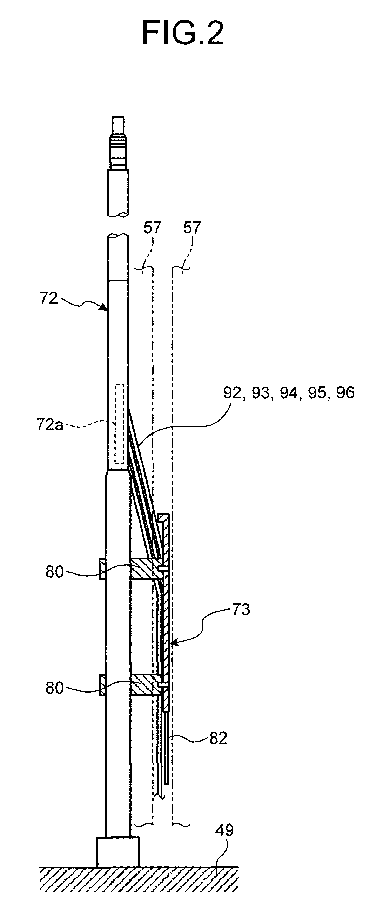

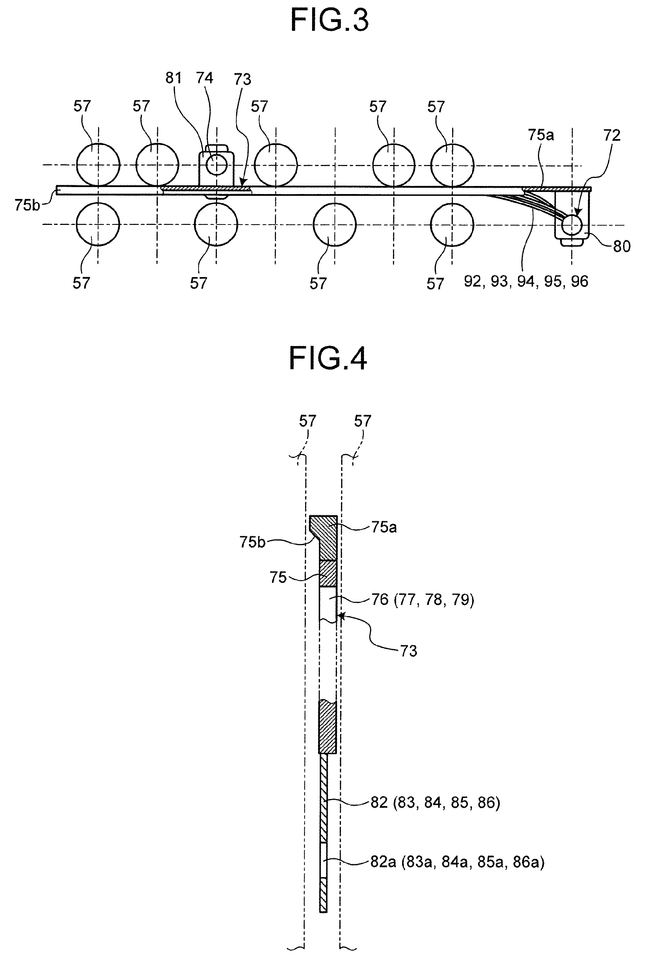

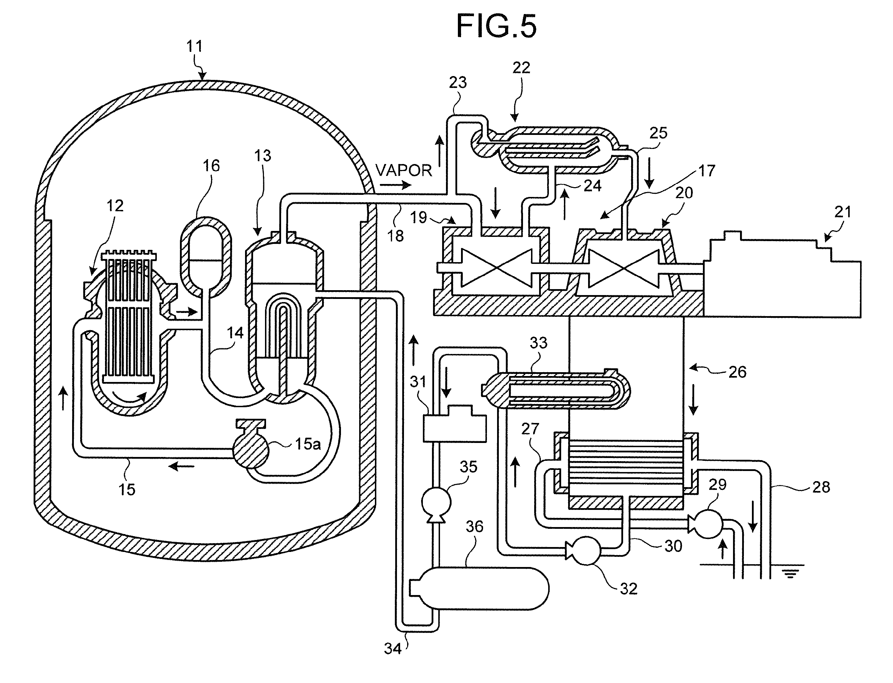

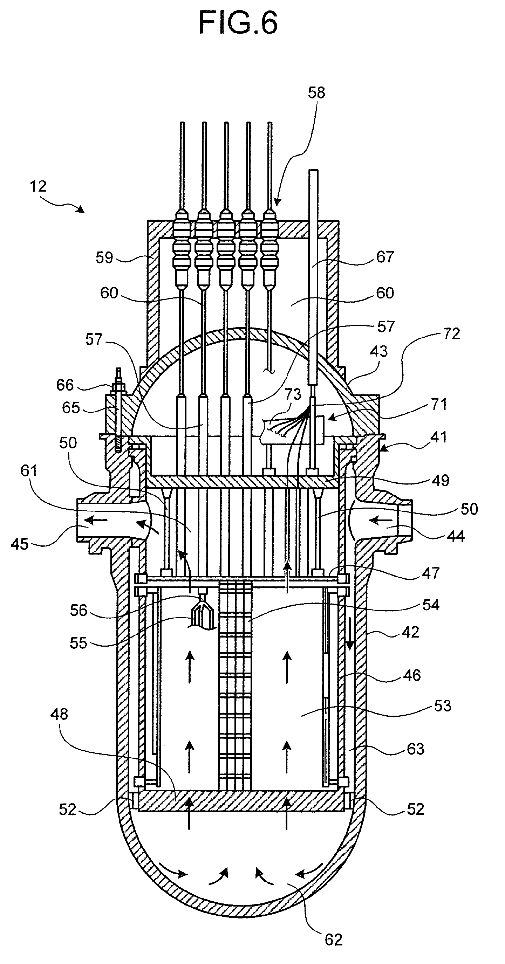

FIG. 1 is a schematic diagram of a neutron flux detector guiding apparatus according to an embodiment of the invention; FIG. 2 is a side view of the neutron flux detector guiding apparatus in the embodiment; FIG. 3 is a plan view of the neutron flux detector guiding apparatus in the embodiment; FIG. 4 is a cross section view of a support plate in the neutron flux detector guiding apparatus in the embodiment; FIG. 5 is a schematic configuration diagram of a nuclear power generation plant; and FIG. 6 is a vertical cross section view of a pressurized water nuclear reactor.

The nuclear reactor in the embodiment is a pressurized water reactor (PWR) in which light water is used as a nuclear reactor coolant and a neutron moderator and is turned to a high-temperature, high-pressure water not boiling throughout the entire reactor internal, the high-temperature, high-pressure water is supplied to a vapor generator to generate vapor by heat exchange, and the vapor is sent to a turbine generator for power generation.

In the nuclear power generation plant with a pressurized water reactor in the embodiment, as illustrated in FIG. 5, a containment 11 stores a pressurized water reactor 12 and a vapor generator 13, the pressurized water reactor 12 and the vapor generator 13 are connected to each other via cooling water pipes 14 and 15, the cooling water pipe 14 is provided with a pressurizer 16, and the cooling water pipe 15 is provided with a cooling water pump 15a. In this case, light water is used as a moderator and primary cooling water (coolant), and a primary cooling system is controlled by the pressurizer 16 to be kept in a high pressure state with a pressure of 150 to 160 atmospheres to suppress boiling of the primary cooling water in the reactor internal. Therefore, the light water is heated as primary cooling water by fuel (nuclear fuel) in the pressurized water reactor 12, the high-temperature primary cooling water kept under a predetermined high pressure is supplied by the pressurizer 16 to the vapor generator 13 through the cooling water pipe 14. At the vapor generator 13, heat exchange is conducted between the high-pressure, high-temperature primary cooling water and secondary cooling water, and the cooled primary cooling water is returned to the pressurized water reactor 12 through the cooling water pipe 15.

The vapor generator 13 is coupled to a vapor turbine 17 via a cooling water pipe 18. The vapor turbine 17 has a high-pressure turbine 19 and a low-pressure turbine 20, and is connected to a power generator 21. In addition, a moisture separation heater 22 is provided between the high-pressure turbine 19 and the low-pressure turbine 20. A cooling water branch pipe 23 branched from the cooling water pipe 18 is coupled to the moisture separation heater 22. The high-pressure turbine 19 and the moisture separation heater 22 are connected together by a low-temperature reheat pipe 24, and the moisture separation heater 22 and the low-pressure turbine 20 are connected together by a high-temperature reheat pipe 25.

Further, the low-pressure turbine 20 of the vapor turbine 17 has a condenser 26. The condenser 26 is connected to an intake pipe 27 and a drainage pipe 28 that supplies or discharge the cooling water (for example, sea water). The intake pipe 27 has a circulating water pump 29, and the other end of the circulating water pump 29 and the water drainage pipe 28 are placed in the sea. The condenser 26 is connected to a deaerator 31 via a cooling water pipe 30, and the cooling water pipe 30 is provided with a condenser pump 32 and a low-pressure water supply heater 33. The deaerator 31 is coupled to the vapor generator 13 via a cooling water pipe 34, and the cooling water pipe 34 is provided with a water supply pump 35 and a high-pressure water supply heater 36.

Therefore, the vapor generated at the vapor generator 13 by heat exchange with the high-pressure, high-temperature primary cooling water is sent to the vapor turbine 17 (from high-pressure turbines 19 to the low-pressure turbine 20) through the cooling water pipe 18, and the vapor is used to drive the vapor turbine 17 and generate electric power by the power generator 21. At that time, after the driving of the high-pressure turbine 19, the vapor from the vapor generator 13 is cleared of moisture and heated at the moisture separation heater 22, and is used to drive the low-pressure turbine 20. Then, after the driving of the vapor turbine 17, the vapor is cooled down using sea water at the condenser 26 and condensed into water. The condensed water is heated at the low-pressure water supply heater 33 by low-pressure vapor extracted from the low-pressure turbine 20, for example, and is cleared of impurities such as dissolved oxygen and uncondensed gas (ammonia gas) at the deaerator 31, and heated at the high-pressure water supply heater 36 by high-pressure vapor extracted from the high-pressure turbine 19, for example, and then returned to the vapor generator 13.

In the pressurized water reactor 12 applied to the thus configured nuclear power generation plant, as illustrated in FIG. 6, a container 41 includes a container main body 42 and a container lid 43 attached to an upper part of the container main body 42 such that an in-reactor structure can be placed into the container 41, and the container lid 43 is capable of being opened and closed with respect to the container main body 42. The container main body 42 is formed in a cylindrical shape in which an upper part is opened and a lower part is closed in a spherical shape, and has at an upper part thereof an inlet nozzle 44 and an outlet nozzle 45 that supplies or discharge light water (coolant) as primary cooling water. In addition, the container lid 43 is detachably attached to the upper part of the container main body 42 by a plurality of stud bolts 65 and a plurality of nuts 66.

In the container main body 42, a cylindrical core barrel 46 is arranged below the inlet nozzle 44 and the outlet nozzle 45 with a predetermined gap from the inner surface of the container main body 42. A disc-shaped upper core plate 47 with a large number of flow holes not illustrated, is coupled to an upper part of the core barrel 46, and a disc-shaped lower core support plate 48 with a large number of flow holes not illustrated, is coupled to a lower part of the core barrel 46. That is, the core barrel 46 is suspended and supported in the container main body 42, and the lower core support plate 48 supports a lower part of fuel. In addition, a radial support key (not illustrated) attached to the lower core support plate 48 welded at the lower part of the core barrel 46 is positioned and held by a plurality of radial key supports welded at the inner surface of the container main body 42. In addition, in the container main body 42, a disc-shaped upper core support plate 49 with a cylindrical body part is placed above the core barrel 46, and is fixed to the container main body 42 and the container lid 43. The upper core plate 47 is connected to the upper core support plate 49 via a plurality of upper core support columns 50. Specifically, in the container main body 42, the upper core support plate is positioned above the core barrel 46, and the plurality of upper core support columns 50 is connected to the upper core plate 47 from the upper core support plate 49 to support the upper part of the fuel.

A reactor internal 53 is supported by the core barrel 46, the upper core plate 47, and the lower core support plate 48. The reactor internal 53 has a large number of fuel assemblies 54. Although not illustrated, the fuel assemblies 54 are configured such that a large number of fuel rods are bundled in a lattice form by a support lattice, and the upper nozzle is fixed to an upper end part of the fuel assemblies 54 and the lower nozzle is fixed to a lower end part of the fuel assemblies 54. The plurality of control rods 55 is brought together at an upper end part thereof to form a control rod cluster 56 that can be put into the fuel assemblies 54. A large number of control rod cluster guiding tubes 57 are supported at the upper core support plate 49 so as to penetrate the upper core support plate 49, and lower end parts of the control rod cluster guiding tubes 57 are extended down to the control rod cluster 56 positioned at an upper end of the fuel assemblies 54.

A magnetic jack control rod drive device 58 is provided above the container lid 43 constituting the container 41, and is stored in a housing 59 integrated with the container lid 43. The large number of control rod cluster guiding tubes 57 are each extended at an upper end part to a position where the control rod cluster is pulled out from the reactor internal, and are extended to a lower end of a thermal sleeve (not illustrated) attached to the control rod drive device 58. Control rod cluster drive axes 60 are extended from the control rod drive device 58 through the control rod cluster guiding tubes 57 to the upper end of the control rod cluster 56 positioned at the upper end of the fuel assemblies 54, thereby to be capable of holding the control rod cluster 56.

The drive axes 60 of the control rod drive device 58 are vertically extended and coupled to the control rod cluster 56. In addition, control rod cluster drive axes 60 have a plurality of circumferential grooves on surfaces thereof with regular longitudinal pitches, and are vertically moved by magnetic jacks to control power of the nuclear reactor.

A neutral flux detector guiding apparatus 71 is disposed in the container 41, ranging from the upper core support plate 49 through the upper core plate 47 to the fuel assemblies 54. The neutral flux detector guiding apparatus 71 is intended to insert the neutral flux detector from an instrumentation nozzle 67 of the container lid 43 into the reactor internal 53 (fuel assemblies 54). This allows the neutral flux detector to measure the level and distribution of neutrons (neutron flux) in the reactor internal 53. The neutral flux detector guiding apparatus 71 will be described later.

Therefore, the control rod cluster drive axes 60 are moved by the control rod drive device 58 to insert the control rods 55 into the fuel assemblies 54, thereby to control nuclear fission in the reactor internal 53, heat the light water charged into the container 41 by generated heat energy, discharge the high-temperature light water from the outlet nozzle 45 and send the same to the vapor generator 13 as described above. Specifically, nuclear fuel constituting the fuel assemblies 54 undergoes fission to release neutrons, the light water as a moderator and primary cooling water lowers motion energy of the released high-speed neutrons and turns the neutrons into thermal neutrons, thereby facilitating new nuclear fission and cooling generated heat by the light water. In addition, when the control rods 55 are put into the fuel assemblies 54 according to the neutron flux detected by the neutron flux detector, the number of neutrons generated in the reactor internal 53 is adjusted, and the neutron flux is quickly inserted into the reactor internal 53 for emergency stop of the nuclear reactor.

Formed in the container 41 are an upper plenum 61 communicating with the outlet nozzle 45 above the reactor internal 53 and a lower plenum 62 below the reactor internal 53. In addition, a downcomer part 63 is formed between the container 41 and the core barrel 46 so as to communicate with the inlet nozzle 44 and the lower plenum 62. Therefore, the light water flows from the four inlet nozzles 44 into the container main body 42, and flows downward through the downcomer part 63 to reach the lower plenum 62, and is guided and raised by a spherical inner surface of the lower plenum 62, and passes through the lower core support plate 48, and then flows into the reactor internal 53. The light water flowing into the reactor internal 53 absorbs heat energy generated from the fuel assemblies 54 constituting the reactor internal 53 to cool the fuel assemblies 54, and becomes high in temperature and rise up to the upper plenum 61 through the upper core plate 47, and then is discharged through the outlet nozzle 45.

The neutral flux detector guiding apparatus 71 will be described in detail.

In the neutral flux detector guiding apparatus 71, as illustrated in FIGS. 1 to 3, the upper core support plate 49 includes a disc-shaped main body 49a supported horizontally in the container main body 42, a cylindrical body part 49b extending upward from an outer circumferential part of the main body 49a, and a flange part 49c increasing in diameter from an upper part of the cylindrical body part 49b. The flange part 49c is fixed by the container lid 43 to the upper end part of the container main body 42.

A support column 72 is cylinder-shaped, and is erected such that a lower end part thereof is in contact with an upper part of the main body 49a of the upper core support plate 49, and the support column 72 has an upper end part penetrating the container lid 43 and extended to outside of the instrumentation nozzle 67. A support plate 73 is vertically disposed above the upper core support plate 49, and has one horizontal end part supported by the support column 72 and the other horizontal end part supported by a support leg 74. Specifically, the support plate 73 is disposed with a predetermined gap from the plurality of control rod cluster guiding tubes 57 so as not to contact the plurality of control rod cluster guiding tubes 57. The support plate 73 is erected on the upper core support plate 49 by the support column 72 and the support leg 74.

The support plate 73 has the upper end part inclined downward from the support column 72 side toward the support leg 74 side. Specifically, the support plate 73 has a trapezoidal shape including a lower side part 73a along the horizontal direction, an upper side part 73b along the inclination direction, and a longer side part 73c and a shorter side part 73d along the vertical direction. The support plate 73 has a rib 75a as a thick part thicker than a main body 75 at the upper side part 73b with respect to a plate-like main body 74. The rib 75a is linearly continued without any difference in level on one surface of the main body 75, and is continued with a difference in level due to the presence of an inclined part 75b on the other surface of the main body 75. Further, the support plate 73 has a plurality of openings 76, 77, 78, and 79 penetrating the support plate 73 in the horizontal direction. The support plate 73 is formed as a frame body of similar width.

The support column 72 is disposed at one end part side of the support plate 73 with a predetermined gap from the one side of thickness direction of the support plate 73, and is fixed to the support plate 73 by two U-shaped brackets 80. The support leg 74 is disposed at the other end part side of the support plate 73 with a predetermined gap from the other side of thickness direction of the support plate 73, and is fixed to the support plate 73 by two U-shaped brackets 81.

In this case, as illustrated in detail in FIG. 3, the support column 72 and the support leg 74 are disposed such that centers thereof are horizontally aligned in the same straight lines with centers of the plurality of control rod cluster guiding tubes 57.

The support plate 73 is disposed such that there is a predetermined gap between a lower surface thereof and the main body 49a of the upper core support plate 49. The support plate 73 is integrally provided with a plurality of support pieces 82, 83, 84, 85, and 86 extending downward from the lower side part 73a toward the predetermined gap. The five support pieces 82, 83, 84, 85, and 86 are arranged at required positions of measurement by the neutron flux detector. The support pieces 82, 83, 84, 85, and 86 are made different in vertical length from the lower surface of the support plate 73 so as to set a predetermined straight tube part from a bending-end part of a guide thimble 92. The support pieces 82, 83, 84, 85, and 86 have openings 82a, 83a, 84a, 85a, and 86a for attaching the fixing brackets of the guide thimble 92. In this case, the support pieces 82, 83, 84, 85, and 86 are joined together so as to be longer from the lower surface of the support plate 73 on the surface side of the support plate 73 with the inclined part 75b.

Meanwhile, thimble guiding tubes 87, 88, 89, 90, and 91 are provided in the upper core support column 50 between the upper core support plate 49 and the upper core plate 47. The thimble guiding tubes 87, 88, 89, 90, and 91 have upper end parts that penetrate the upper core support plate 49, protrude from an upper surface of the upper core support plate 49, and are fixed with nuts. The guide thimble guiding tubes 87, 88, 89, 90, and 91 are opposed to lower sides of the support pieces 82, 83, 84, 85, and 86 provided on the support plate 73. Although not illustrated, the guide thimble guiding tubes 87, 88, 89, 90, and 91 have lower end parts that penetrate the upper core plate 47 and communicate with the reactor internal 53.

The guide thimbles 92, 93, 94, 95, and 96 each have an inner diameter to allow neutron flux detectors to be inserted into the inside thereof, although not illustrated. The guide thimbles 92, 93, 94, 95, and 96 are extended to a seal part of the instrumentation nozzle 67 outside the container 41. The guide thimbles 92, 93, 94, 95, and 96 are supported at upper part sides by support pieces (not illustrated) and stored in the support column 72, and are extended at lower part sides from an opening 72a of the support column 72 to the outside. The guide thimbles 92, 93, 94, 95, and 96 are arranged along the support plate 73, and are inserted into the guide thimble guiding tubes 87, 88, 89, 90, and 91 disposed in the upper core support column 50, respectively.

The guide thimbles 92, 93, 94, 95, and 96 are supported by the support plate 73 between the support column 72 and the guide thimble guiding tubes 87, 88, 89, 90, and 91. Specifically, the guide thimbles 92, 93, 94, 95, and 96 come closer to the support plate 73 from the opening 72a of the support column 72 at a predetermined angle, and are arranged along the support plate main body 75 thinner than the rib 75a, and are routed in a predetermined curved shape to the upper end parts of the corresponding guide thimble guiding tubes 87, 88, 89, 90, and 91. In this case, the guide thimble 96 routed to the guiding tube 91 most distant from the support column 72 is arranged near the lower part of the rib 75a of the support plate 73.

The guide thimbles 92, 93, 94, 95, and 96 are individually supported by support blocks 97, 98, 99, 100, and 101 at the support pieces 82, 83, 84, 85, and 86 above the guiding tubes 87, 88, 89, 90, and 91. In this case, the guide thimbles 92, 93, 94, 95, and 96 are supported in the vertical direction at the support pieces 82, 83, 84, 85, and 86. The support blocks 97, 98, 99, 100, and 101 are placed at openings 82a, 83a, 84a, 85a, and 86a of the support pieces 82, 83, 84, 85, and 86.

As described above, in the neutron flux detector guiding apparatus in the embodiment, the cylindrical support column 72 is erected on the upper core support plate 49 of the container main body 42, and the plurality of guide thimble guiding tubes 87, 88, 89, 90, and 91 is provided between the upper core support plate 49 and the upper core plate 47, and the plurality of guide thimbles 92, 93, 94, 95, and 96 is extended from the support column 72 to the guide thimble guiding tubes 87, 88, 89, 90, and 91 in the upper core support column 50, and the guide thimbles 92, 93, 94, 95, and 96 are supported by the support plate 73 that is supported at the one end part by the support column 72 and is erected at the other end part by the support leg 74 above the upper core support plate 49, and the upper end part of the support plate 73 is inclined downward from the support column 72 side toward the support leg 74 side.

Therefore, the support plate 73 is supported at the one end part by the support column 72 at the upper core support plate 49, and is supported at the other end part by the support leg 74 at the upper core support plate 49, and is inclined at the upper end part downward from the support column 72 side toward the support leg 74 side. This makes it possible to support efficiently the guide thimbles 92, 93, 94, 95, and 96 extended from the support column 72 into the guide thimble guiding tubes 87, 88, 89, 90, and 91, and reduce a fluid force received from light water (coolant) flowing through the container 41. That is, it is possible to realize a simplified structure by forming the support plate 73 in an ideal shape, specifically, forming the support plate 73 so as to have only an area in which the guide thimbles 92, 93, 94, 95, and 96 are routed.

In the neutron flux detector guiding apparatus in the embodiment, the support plate 73 is formed in a trapezoidal shape including the horizontal lower side part 73a, the inclined upper side part 73b, and the vertical longer side part 73c and shorter side part 73d. Therefore, forming the support plate 73 in a trapezoidal shape makes it possible to realize light weight and reduce a fluid force received form light water. In addition, it is possible to simplify the support structure including the support column 72 and the support leg 74 by decreasing a liquid-wetted area to minimize an area to which radioactive materials are adhered. The central part of the support plate 73 is cut out except for an extent for providing rigidity to realize light weight and reduction of a liquid-wetted area.

In the neutron flux detector guiding apparatus in the embodiment, the rib (thick part) 75a thicker than the main body 75 is provided along the upper side part 73b of the support plate 73. Therefore, providing the rib 75a on the upper side part 73b of the support plate 73 makes it possible to enhance bending rigidity of the support plate 73 and make the support plate 73 thinner to realize light weight, and makes it possible to increase the support plate 73 in stiffness to support the guide thimbles 92, 93, 94, 95, and 96 in a proper manner.

In the neutron flux detector guiding apparatus in the embodiment, the support column 72 is arranged on the one side of thickness direction of the support plate 73 and is fixed to the support plate 73 by the U-shaped brackets 80, and the guide thimbles 92, 93, 94, 95, and 96 are extended from the support column 72 along the main body 75 of the support plate 73. Therefore, extending the guide thimbles 92, 93, 94, 95, and 96 from the support column 72 along the thin-plate main body 75 of the support plate 73 makes it possible to support the guide thimbles 92, 93, 94, 95, and 96 in a proper manner without interfering with the control rod cluster guiding tubes 57 as surrounding members.

In the neutron flux detector guiding apparatus in the embodiment, the predetermined gap is provided between the support plate 73 and the upper core support plate 49, the support pieces 82, 83, 84, 85, and 86 are extended from the lower side part 73a of the support plate 73 through the predetermined gap, and the guide thimbles 92, 93, 94, 95, and 96 are supported at the support pieces 82, 83, 84, 85, and 86. Therefore, the support column 72 and the guide thimble guiding tubes 87, 88, 89, 90, and 91 are horizontally shifted in position, and thus the guide thimbles 92, 93, 94, 95, and 96 are obliquely arranged between the support column 72 and the guide thimble guiding tubes 87, 88, 89, 90, and 91. However, the guide thimbles 92, 93, 94, 95, and 96 are supported by the support pieces 82, 83, 84, 85, and 86 extending downward from the support plate 73, which makes it possible to support the guide thimbles 92, 93, 94, 95, and 96 in a proper manner in the vertical direction.

In the neutron flux detector guiding apparatus in the embodiment, the five guide thimbles 92, 93, 94, 95, and 96 are stored in the support column 72, and the plurality of guide thimbles 92, 93, 94, 95, and 96 is extended into the guiding tubes 87, 88, 89, 90, and 91, respectively, and is individually supported at the support plate 73. Therefore, it is possible to support properly the plurality of guide thimbles 92, 93, 94, 95, and 96 arranged from the support column 72 by the support plate 73 to the guide thimble guiding tubes 87, 88, 89, 90, and 91.

In the neutron flux detector guiding apparatus in the embodiment, the support plate 73 has the penetrating openings 76, 77, 78, and 79 provided in the horizontal direction. Therefore, providing the support plate 73 with the openings 76, 77, 78, and 79 makes it possible to realize light weight, suppress a fluid force received from light water, reduce a liquid-wetted area, decrease an irradiated area, and simplify the support structure including the support column 72 and the support leg 74.

In the neutron flux detector guiding apparatus in the embodiment, the support plate 73 is disposed between the plurality of control rod cluster guiding tubes 57. Therefore, it is possible to dispose properly the support plate 73 without obstructing or interfering with the control rod cluster guiding tubes 57.

In the foregoing embodiment, the support plate 73 is formed in a trapezoidal shape. However, the support plate 73 is not limited to this shape but may have any shape such as a triangle as far as the upper end part (upper side part 73b) of the support plate 73 is inclined. In addition, the rib 75a is provided along the upper side part 73b of the support plate 73, but the rib 75a may be provided at the shorter side part 73d, for example, as far as the rib 75a does not obstruct routing of the guide thimbles 92, 93, 94, 95, and 96. Further, the support plate 73 is supported on the upper core support plate 49 by the support column 72 and the one support leg 74, but the support plate 73 may be supported by two or more support legs. The positional relationship between the support column 72 and the support leg 74 with respect to the support plate 73 is not limited to that in the embodiment. Moreover, the numbers of the guide thimbles 92, 93, 94, 95, and 96 and the guide thimble guiding tubes 87, 88, 89, 90, and 91 and the like are not limited to those in the embodiment.

### Reference Signs List

- 11: Containment
- 12: Pressurized water reactor
- 13: Vapor generator
- 17: Vapor turbine
- 21: Power generator
- 41: Container
- 42: Container main body (structure main body)
- 43: Container lid
- 46: Core barrel
- 47: Upper core plate
- 49: Upper core support plate
- 50: Instrumentation nozzle
- 53: Reactor internal
- 54: Fuel assembly
- 55: Control rod
- 57: Control rod cluster guiding tube
- 58: Control rod drive device
- 59: Housing
- 67: Upper core support column
- 71: Neutron flux detector guiding apparatus
- 72: Support column
- 73: Support plate
- 74: Support leg
- 75: Main body
- 75a: Rib
- 76, 77, 78, and 79: Openings
- 82, 83, 84, 85, and 86: Support piece
- 87, 88, 89, 90, and 91: Guiding tube
- 92, 93, 94, 95, and 96: Guide thimble

## Claims

1. A neutron flux detector guiding apparatus, comprising:
a cylindrical support column erected on an upper core support plate of a nuclear reactor structure main body, the cylindrical support column having an upper end part penetrating a container lid;
a guide thimble guiding tube having an upper end part penetrating the upper core support plate, the guide thimble guiding tube being supported by the upper core support plate;
a guide thimble extending from the support column into the guide thimble guiding tube, for allowing a neutron flux detector to be inserted into an inside thereof; and
a support plate having one end part supported at the support column and the other end part erected by a support leg above the upper core support plate, for supporting the guide thimble, wherein
the support plate is vertically disposed on the upper core support plate, and
an upper end part of the support plate is inclined downward from the support column side to the support leg side.

2. The neutron flux detector guiding apparatus according to claim 1, wherein the support plate has a trapezoidal shape in which an upper side part is inclined with respect to a horizontal lower side part.

3. The neutron flux detector guiding apparatus according to claim 1 or 2, wherein the support plate has a thick part thicker than the main body along the upper side part.

4. The neutron flux detector guiding apparatus according to claim 3, wherein
the support column is disposed on one side of thickness direction of the support plate,
the support column is fixed to the support plate by a U-shaped bracket, and
the guide thimble is extended from the support column along the main body of the support plate.

5. The neutron flux detector guiding apparatus according to any one of claims 1 to 4, wherein
a predetermined gap is provided between the support plate and the upper core support plate,
the support plate has a support piece extending from the lower side part through the predetermined gap, and
the guide thimble is supported by the support piece.

6. The neutron flux detector guiding apparatus according to any one of claims 1 to 5, wherein
a plurality of the guide thimbles is disposed inside the support column,
the plurality of guide thimbles is extended into the plurality of the guiding tubes supported at the upper core support plate at predetermined intervals, and
the plurality of guide thimbles is individually supported at the support plate.

7. The neutron flux detector guiding apparatus according to any one of claims 1 to 6, wherein the support plate has an opening penetrating in the horizontal direction.

8. The neutron flux detector guiding apparatus according to any one of claims 1 to 7, wherein the support plate is disposed between the plurality of control rod cluster guiding tubes.
